# EUROPEAN PATENT APPLICATION

(11) **EP 2 110 257 A2**
(43) Date of publication of application: **21.10.2009**
(21) Application number: 09165759.3
(22) Date of filing: 14.11.2006
(51) Int. Cl.: B41J 11/00, B41J 3/54

(54) **Image forming system, printing apparatus for the system, and image forming method**

(30) Priority: 15.11.2005 JP 2005329584; 08.11.2006 JP 2006302827
(62) Divisional of application: 06124066.9
(71) Applicant: Canon Finetech Inc., Misato-shi Saitama 341-8527 (JP)
(72) Inventor: Saijo, Shinichi, Misato-shi Saitama 341-8527 (JP); Odaka, Jouji, Misato-shi Saitama 341-8527 (JP)
(74) Representative: TBK-Patent

(57) **Abstract**

An image forming apparatus has a plurality of printing apparatuses arranged in a direction of a print medium feed direction and is adapted to cooperate with each other to print the same or corresponding pages. The image forming apparatus comprises memory means installed in each of the printing apparatuses for storing a plurality of pages of image data, means, when a printing operation is interrupted, for determining the page following a page that has completely been printed before the interruption by the printing apparatus located most downstream in the print medium feed direction as a print resumption page information, the print resumption page information representing the same pages from which the printing operation is to be resumed, and means installed in each of the printing apparatuses for resuming the printing operation beginning with those image data among the plurality of pages of image data stored in the memory means which corresponds to the print resumption page information.

## Description

The present invention relates to an image forming system having a plurality of printing apparatuses arranged to cooperate with one another to print on a print medium. This invention also relates to a printing apparatus for the image forming system and an image forming method. The print medium can include a business form, a label or tack seal removably stuck to ground paper, a postcard and an envelope. The print medium may be a continuous sheet or a cut sheet.

Printing apparatus that print on a print medium by feeding the print medium are generally known to include a serial printer and a line printer. The serial printer performs a printing operation by alternately repeating a main scan in a direction different from that of a column of dot printing elements or nozzles formed in the print head and a feeding of the print medium (sub scan) following each main scan. The line printer uses a print head having nozzles arrayed in a range corresponding to a width of the print medium and performs a printing operation by driving the print head as the print medium is fed. The most salient feature of the line printer is its capability to print at high speed.

In these printing apparatuses, any of the following recovery methods in the event of errors such as abnormal feeding of a print medium (paper jam) is used.
- When an error occurs, the printing operation is halted and image data being printed is saved on the printer side. When the error is cleared, the printing of the image data is automatically resumed; and
- In the event of an error, the printing operation is halted and the image data being printed is discarded. When the error is cleared, a host device such as personal computer (PC) transmits the image data again and the printing apparatus resumes the printing operation according to the image data received.

In recent years an image forming apparatus has become available which uses a plurality printing apparatuses in the form of modules to allow for printing on a wider print medium or at a higher printing speed. In the following description, the printing apparatus constructed in the form of a module is called a print module, and a construction incorporating a plurality of such print modules and having them cooperate with one another to form an image may be referred to as a multiengine system.

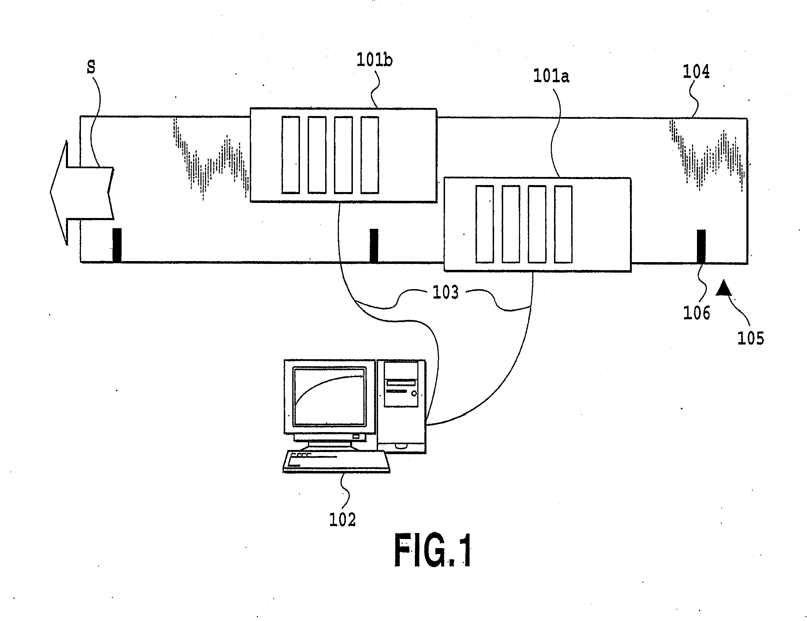

Fig. 1 schematically shows an outline construction of an image forming system using a multiengine system incorporating two print modules 101a and 101b.

Image data transmitted from a host device or PC 102 is transferred to the individual print modules 101a, 101b through a printer cable 103. These print modules 101a, 101b, when a front end mark 106 on a continuous print medium 104 is detected by an optical sensor 105, initiate a printing operation on the print medium 104 being fed in a direction of arrow S.

Here, the print modules 101a, 101b are arranged at different positions in the feed direction so that they can print on intended areas (pages) of the print medium 104 being fed.

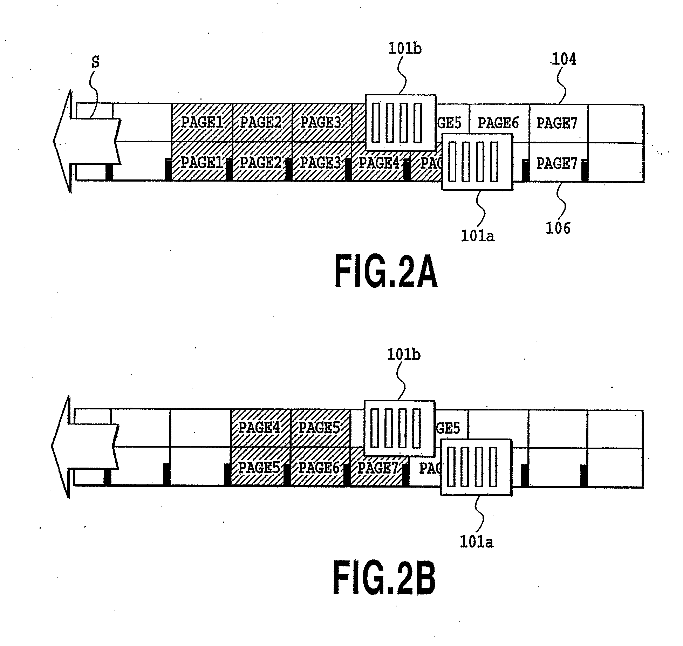

Fig. 2A shows how the print modules 101a, 101b print on the print medium 104. The print modules 101a, 101b are also arranged at different positions in a direction perpendicular to the feed direction and perform printing by dividing the area on the print medium 104 along a print medium center line extending in the feed direction. Page 1 to Page 7 assigned to the print medium 104 represent pages to be printed by the print modules. Page 1 to Page 7 printed by the print module 101a and Page 1 to Page 7 printed by the print module 101b have the corresponding contents. Hatch on Pages 1-7 indicates that the printing operation has been finished.

With the print modules 101a, 101b arranged as shown in Fig. 1, when the print module 101a has completed a fourth page (Page 4), the print module 101b is printing on a fourth page (Page 4) as shown in Fig. 2A. That is, when seen with a time axis as a reference, these print modules 101a, 101b print on different pages at a certain time point.

Therefore such a system cannot simply use the recovery method adopted by an image forming system incorporating a single printing apparatus. To deal with this situation, it is contemplated to use a technique described in Japanese Patent Laid-Open No. 2003-150907. This document discloses a recovery method in which both the PC and the printer discard the image data being printed in the event of an error and in which an operator checks the printed medium and specifies on the PC the next following image data to be printed.

This recovery method, however, has drawbacks in terms of workability and productivity. That is, suppose an error occurs at the time of Fig. 2A. At this point in time, the print module 101a has completed printing up to Page 4 and the print module 101b has finished printing up to Page 3. To execute the recovery operation requires the user to individually specify corresponding pages of image data for the different print modules. This is a cumbersome procedure for the user and causes a wrong designation. If the user forgets this or wrongly specifies the pages to be printed, for example, if the user specifies Page 5 which follows Page 4 for the print module 101a and Page 4 which follows Page 3 for the print module 101b, a page inconsistency results, as shown in Fig. 2B..

Particularly, when the image forming system having the multiengine system of Fig. 1 is applied to printing a business form, such as invoice, the above recovery operation, unless handled properly, may result in an inconsistency, for example, between a customer's name and address printed by the print module 101a and an amount of charge printed by the print module 101b, an impermissible, grave error.

Further, when the recovery method described in Japanese Patent Laid-Open No. 2003-150907 is applied, the image data needs to be created again. In a situation where tens of thousands of pieces of data are to be printed continuously at high speed in a single session of the printing operation, the workability and productivity deteriorate significantly.

The present invention has been accomplished to overcome the above-mentioned problems.

In a first aspect of the present invention, there is provided an image forming apparatus having a plurality of printing apparatuses arranged in a direction of a print medium feed direction and adapted to cooperate with each other to print the same or corresponding pages, the image forming apparatus comprising:
memory means installed in each of the printing apparatuses for storing a plurality of pages of image data;
notification means installed in each of the printing apparatuses for outputting print completion page information when a printing operation is interrupted, the information representing a page that has completely been printed immediately before the interruption;
means for determining print resumption page information based on the plurality of pieces of the print completion page information notified from the plurality of the printing apparatuses when the printing operation is interrupted, the print resumption page information representing the same pages from which the printing operation is to be resumed; and
means installed in each of the printing apparatuses for resuming the printing operation beginning with those image data among the plurality of pages of image data stored in the memory means which corresponds to the print resumption page information.

In a second aspect of the present invention, there is provided a printing apparatus for constructing the above image forming apparatus.

In a third aspect of the present invention, there is provided an image forming method for printing the same or corresponding pages by causing a plurality of printing apparatuses to cooperate with each other, wherein the plurality of printing apparatuses are arranged in a print medium feed direction and have memory means for storing a plurality of pages of image data, the method comprising the steps of:
causing each of the printing apparatuses to notify print completion page information when a printing operation is interrupted, the information representing a page that has completely been printed immediately before the interruption;
determining print resumption page information based on a plurality of pieces of the print completion page information notified from the plurality of printing apparatuses when the printing operation is interrupted, the print resumption page information representing the same pages from which the printing operation is to be resumed; and
causing each of the printing apparatuses to resume the printing operation beginning with those image data among the plurality of pages of image data stored in the memory means which corresponds to the print resumption page information.

In this invention, memory means for storing a plurality of pages of image data is installed in the printing apparatus; in the event of an interruption of the printing operation, print completion page information representing a page that has been completely printed just before the interruption is notified by the printing apparatus; based on the plurality of pieces of print completion page information notified, print resumption page information representing the same or corresponding pages that the print modules are to resume printing is determined; and the print modules are made to resume the printing operation, beginning with those image data among the plurality of pages stored in the memory means that matches the print resumption page information. With this procedure, the interruption and resumption of printing (recovery operation) can be performed without causing any loss of data or page inconsistency.

Further features of the present invention will become apparent from the following description of exemplary embodiments (with reference to the attached drawings).

Fig. 1 is a schematic diagram showing an outline construction of a conventional image forming system.

Figs. 2A and 2B are explanatory diagrams explaining problems experienced with the conventional system.

Fig. 3 is a schematic diagram showing an outline construction of an image forming system according to a first embodiment of this invention.

Fig. 4 is a schematic diagram showing a printing operation of print modules used in the system of Fig. 3.

Fig. 5 is a partly enlarged view of Fig. 4 showing how a plurality of print heads shares the printing operation.

Fig. 6 is a block diagram showing a configuration of a control system for the print modules used in the system of Fig. 3.

Fig. 7 is a schematic diagram showing positions at which the print modules used in the system of Fig. 3 start printing and a position at which printed image data may be discarded after the printing operation is finished.

Fig. 8 is a flow chart showing an example printing procedure executed by the print modules used in the system of Fig. 3.

Fig. 9A and Fig. 9B are schematic diagram showing how the printing operation is resumed (recovered) in the event that an error occurs during the printing operation.

Fig. 10 is a flow chart showing an example recovery procedure executed by the print modules used in the system of Fig. 3.

Fig. 11 is a flow chart showing an example recovery procedure executed by a host computer used in the system of Fig. 3.

Fig. 12 is a schematic diagram showing an outline configuration of an image forming system according to a second embodiment of this invention.

Now, the present invention will be described in detail by referring to the accompanying drawings.

### [First Embodiment]

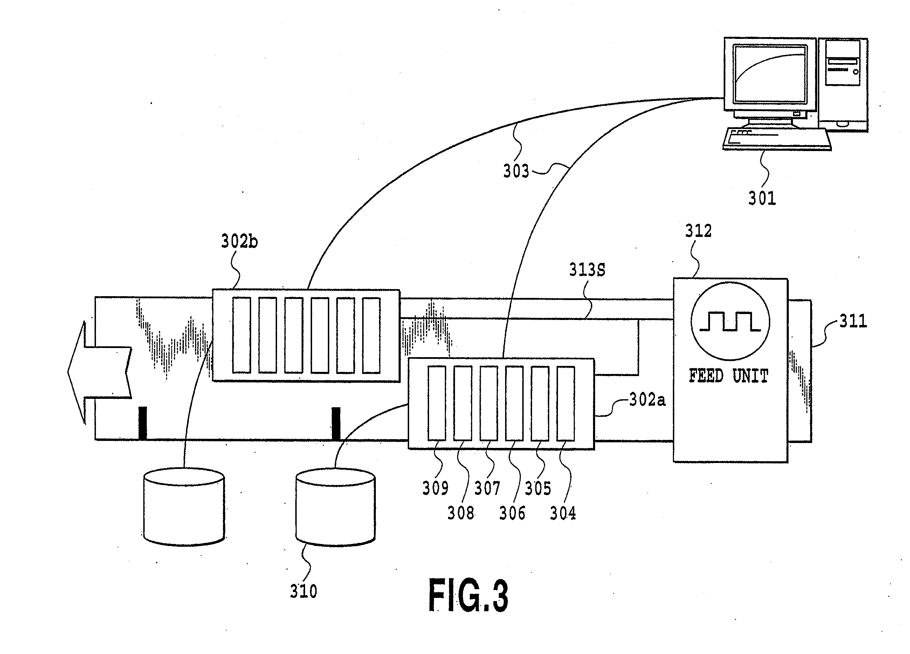

Fig. 3 shows an image forming system according to the first embodiment of this invention. The image forming system shown in the figure comprises an image forming apparatus having two print modules 302a, 302b arranged in the same way as in Fig. 1, and a host computer 301 commonly connected to the print modules 302a, 302b.

The host computer 301 transfers to the individual print modules 302a, 302b through printer cables 303 image data which is divided in a width direction of a print medium 311 according to the construction and arrangement of the print modules 302a, 302b. The host computer 301 can also detect a printer status of the print modules 302a, 302b, such as error information.

The print module 302a has six line print heads (represented by reference numbers 304-309) each having nozzles arrayed over a predetermined length (e.g., four inches) in the width direction of the print medium. The print heads 304-309 are commonly connected to an ink tank 310 containing a black ink and supplied with the ink therefrom. The print module 302a is synchronized with a position detection signal of the print medium 311 supplied through an interface signal line 313s from a feed unit 312 and drives the print heads 304-309 according to the image data to perform printing on the print medium 311. The print module 302b also has the similar construction.

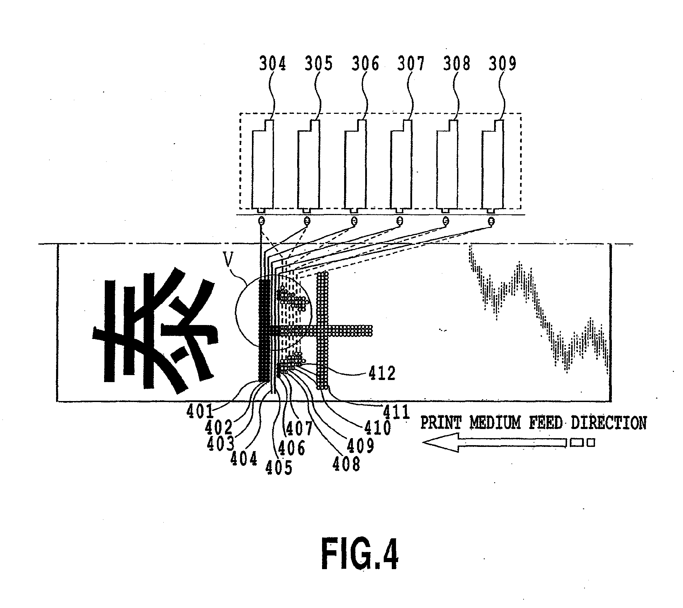

Fig. 4 shows how the print module used in this embodiment performs the printing operation by taking as an example the operation of the print module 302a involved in the printing on one side of the print medium. The printing operation begins with a print head 304 located most upstream in the print medium feed direction. For easy understanding of the correspondence between each print head and its associated raster, Fig. 4 shows the print heads 304-309 rotated 180 degrees in a horizontal plane from the actual arrangement (Fig. 3).

The print module 302a of this embodiment has the line print heads 304-309 arranged side by side in the print medium feed direction and drives them for printing. These print heads all ejecting the black ink are supplied their associated print data, which is generated by dividing image data of the same color (black) by rasters, and share the image forming of a monochrome (black) image. The print heads 304-309 may use electrothermal transducers (ejection heaters) that, when energized, generate thermal energy to cause a film boiling in ink to eject ink.

In synchronism with the position detection signal of the print medium 311 supplied from the feed unit 312 through the interface signal line 313s, data of one raster is transferred from the image memory where the black image data has been arranged to the print head 304, which in turn prints an image 401 for one raster. Similarly, in response to the next position detection signal, the data of the next raster is transferred from the image memory to the print head 305, which then prints an image 402 for the next raster. Similarly, in synchronism with another position detection signal, the data of one raster is successively read out from the image memory and transferred to the print heads 306-309 one after another, which then print raster images 403-406, respectively. In this way, the print heads 304-309 are successively operated to print divided image data for each raster.

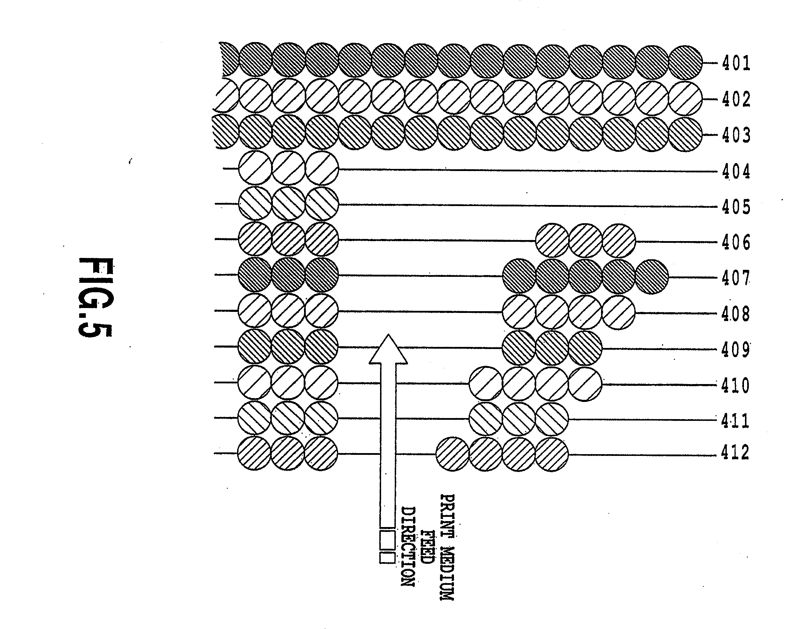

Fig. 5 is an enlarged view of one part V of Fig. 4. According to the operation described above, each print head is assigned a print raster every six rasters, as described below.
Print head 304: raster 401, 407, ...
Print head 305: raster 402, 408, ...
Print head 306: raster 403, 409, ...
Print head 307: raster 404, 410, ...
Print head 308: raster 405, 411, ...
Print head 309: raster 406, 412, ...

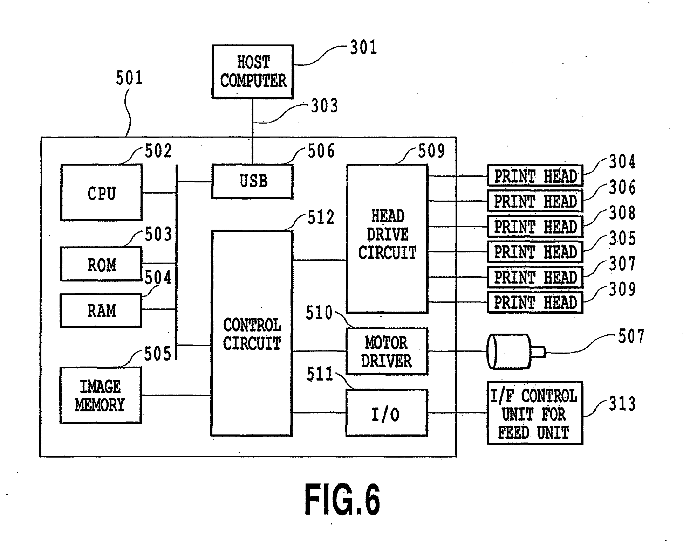

Fig. 6 is a block diagram showing a configuration of a control system for the print modules used in this embodiment.

In the figure, a control unit 501 includes a CPU 502, a ROM 503, a RAM 504, a communication controller 506, an image memory 505, a head drive circuit 509, a motor driver 510, an input/output unit (I/O) 511, and a control circuit 512.

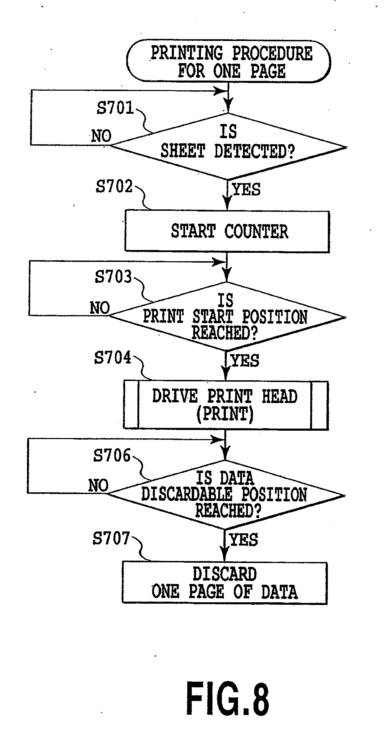

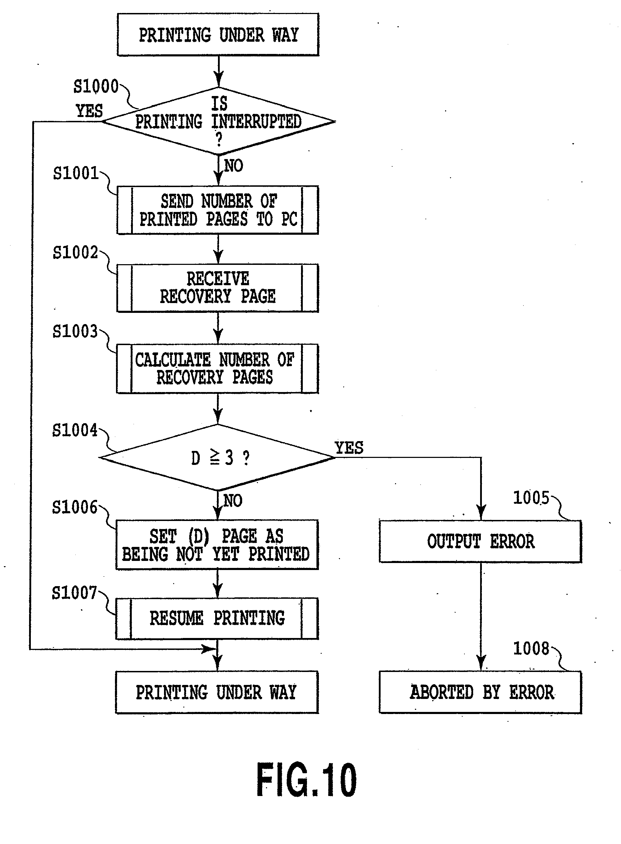

The CPU 502 executes various calculations, decisions and controls according to procedures described later with reference to Fig. 8 and Fig. 10. The ROM 503 stores control programs and fixed data associated with the procedures executed by the CPU 502. The RAM 504 has areas used as a work area by the CPU 502 when it processes various data, as a storage area to store control information transferred from the host computer 301, and as a transmission/reception buffer. The communication controller 506 transfers data between the host computer 301 and the print modules through the communication cables 303 and uses a USB controller, for example. Information that is communicated from the host computer 301 to the print modules include image data to be printed and commands specifying the execution of printing, and also may includes information specifying a print start position or timingand image data discardable position or timing. The information communicated from the print modules to the host computer 301 includes statuses of the print modules.

The image memory 505 is used for arranging image data to be printed. The head drive circuit 509 energizes the electrothermal transducers in the print heads 304-309 at a specified timing during the print medium feeding according to the print data. The motor driver 510 drives motors 507 that work as a drive source for the cleaning operation and the printing operation of the print heads 304-309. The I/O 511 is connected to the interface (I/F) control unit 313 for the feed unit 312 that supplies and transports the print medium. The I/O 511 outputs a start/stop signal for the feed unit 312 and inputs a detection signal from a print medium sensor 604 (Fig. 6). The control circuit 512 performs control on the image memory 505, the head drive circuit 509, the motor driver 510 and the I/O 511.

As is seen from Fig. 6, each print module is a complete printing apparatus in terms of signal system and they all have the similar hardware and operate according to the similar software. The operation of one print module does not directly affect the operation of the other print module and they cooperate in printing the print medium.

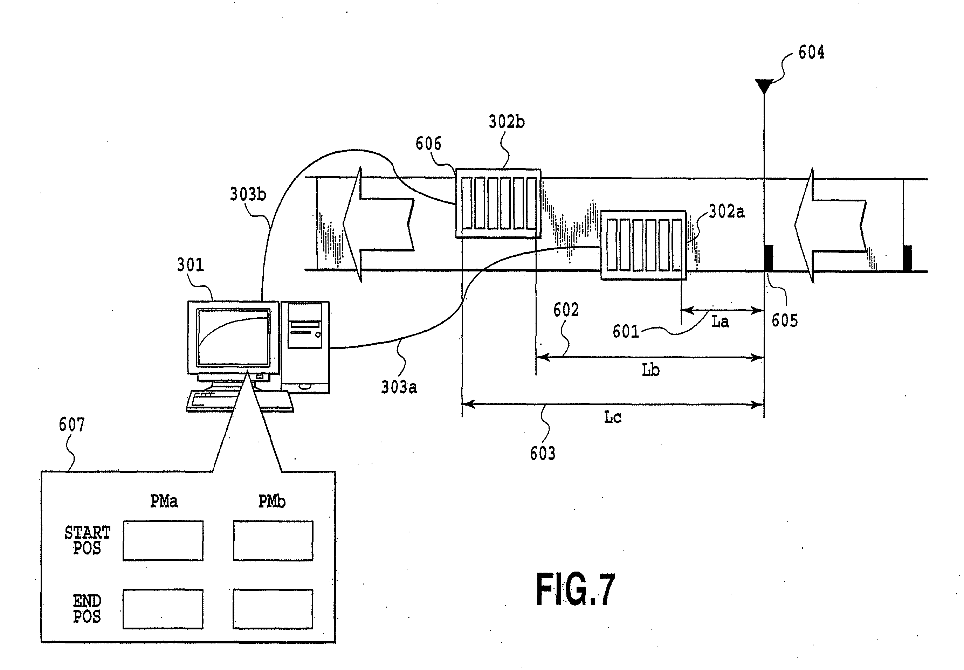

Referring to Fig. 7, print start positions at which the print modules 302a and 302b start printing and a data discardable position at which printed image data is discarded after the printing is finished will be explained.

First, the print start position in the print medium feed direction for the print module 302a is determined by a distance La between the print medium sensor 604 and the print head situated most upstream in the print medium feed direction. That is, the print start position for the print module 302a is a position at the distance La from the position at which the front end of the print area on the print medium (for example, a front end mark 605 at the front end of the print area) is detcted by the print medium sensor 604. The same applies to the print start position for the print module 302b located downstream of the print module 302a in the print medium feed direction. That is, the print start position for the print module 302b is a position at a distance Lb from the position at which the front end mark 605 is detcted by the print medium sensor 604. These print start positions may be set as values in print start position fields 'START POS' of columns PMa and PMb corresponding to the print modules 302a and 302b,respectively, in a software setting screen 607 on the host computer 301. Since the distances La and Lb are fixed values determined by the arrangement of the print modules, the print start positions may be automatically set by the host computer 301, rather than being set by the user.

A position at which image data may be discarded (an image data discardable position) corresponds to a position at which the print head of the print module 302b located most downstream in the print medium feed direction. The position is at a distance Lc from the position at which the front end mark 605 is detcted by the print medium sensor 604. The image data discardable position means that the same or corresponding pages have been completely printed by both of the print modules 302a and 302b. The image data discardable position may be set as the same values in fields 'END POS' of columns PMa and PMb corresponding to the print modules 302a and 302b,respectively.

Incidentally, any position in the print medium feed direction can be typically detected by using output pulses from an encoder (not shown). For example, assuming that the above distance La is 2.0 inches and resolution of the encoder is 600 pulses/inch, the value set as the print start position for the print modules 302a is '1200'.

Fig. 8 shows an example printing procedure executed by each print module on one page. Prior to the printing procedure, image data corresponding to the number of pages to be printed is arranged in the image memory 505 of each print module and the print start position and the image data discardable position are notified to each print module.

When the print medium sensor 604 detects the front end mark 605 of the print page of interest on the print medium (step S701), a counter or timer is set to determine the print start position and the image data discardable timing, explained in Fig. 7 (step S702). When it is found that the print start position is reached (step S703), the print heads are driven according to the image data to sprint the page of interest (S704). Then, when it is determined that the image data discardable position is reached (step S706), the image data of the page of interest is discarded, ending this procedure.

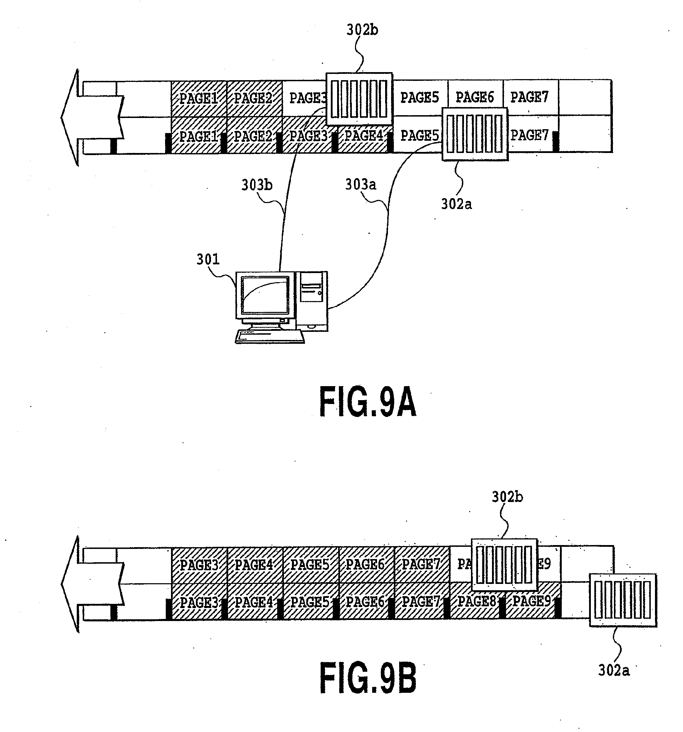

Fig. 9A and Fig. 9B show how the printing operation is resumed (recovered) when an error has occurred during the printing operation.

The print modules 302a, 302b are printing on different pages according to their positional relation. Fig. 9A shows a state in which the print module 302a has completed the printing on Page 4 and the print module 302b has completed the printing on Page 2. If in this state the printing operation is interrupted by an error, the page inconsistency will occur when the printing is resumed. So, in this embodiment, the print modules 302a, 302b resume the printing operation according to the print resumption page information set by the host computer 301. That is, as shown in Fig. 9B, both of the print modules 302a, 302b start printing from Page 3.

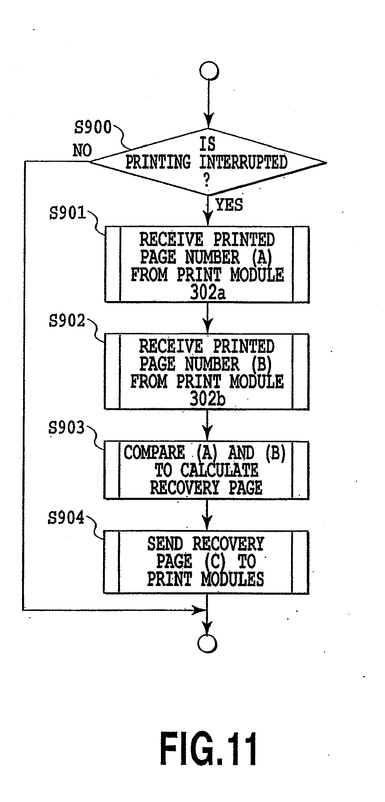

The recovery procedure of this embodiment will be explained by referring to Fig. 10 and Fig. 11. Fig. 10 and Fig. 11 are flow charts showing example procedures executed by the print modules (302a, 302b) and by the host computer 301, respectively.

When, as shown in Fig. 10, the printing operation is interrupted by some error during printing (step S1000), the print modules notify the host computer 301 of the page information about the pages that have been completely printed just before the error (step S1001). When the printing operation is interrupted at time of Fig. 9A, the print module 302a notifies "4 (=A)" and the print module 302b notifies "2 (=B)".

When the host computer 301 recognizes the interruption of the printing operation (step S900), as shown in Fig. 11, it acquires print completion page information A and B from the print modules 302a and 302b (step S901 and S902), respectively, and compares them to determine the recovery start page information C (step S903). The recovery start page information C may be set as one added to the minimum value of the print completion page information A and B. That is, if A = 4 and B = 2, the recovery start page information C may be set to C = 3. Then, the common value (C = 3) is sent as the recovery page information to the print modules 302a and 302b (step S904).

The print modules 302a, 302b, as shown in Fig. 10, calculate the number of pages D that needs to be recovered (step S1003) according to the recovery start page information received from the host computer 301 (step S1002). In the example of Fig. 9A, although the print module 302a has already printed up to Page 4, two pages -- Page 3 and Page 4 -- according to the recovery start page information "3" are taken to be the number of pages D.

Next, a check is made as to whether image data for the number of pages D exists, i.e., whether the data of interest is not yet discarded or already discarded (step S1004). In the construction of this embodiment, the print module 302a precedes the print module 302b in the printing operation by two pages. The two pages of image data printed by the print module 302a are not discarded until the printing by the print module 302b is completed. Thus, step S1004 confirms that the number of pages D is not 3 or more. If it is found that the page number is three or more, it is decided that an error has occurred in the processing and an error information is output (step S1005), ending this procedure. By issuing an error information when the printing cannot be resumed correctly due to some failure, as described above, it is possible to avoid inconveniences or troubles that the printing operation is performed without the user noticing the loss of data or page inconsistency or that inappropriate printed matters reach destinations.

If, on the other hand, the number of pages D is found to be not 3 or more, the two pages of image data (Page 3 and Page 4) are set as being not yet printed (step S1006) and the print resumption procedure is initiated (sep S1007). As a result, both of the print modules 302a and 302b start printing from Page 3, so that their printing operations conform to each other, as shown in Fig. 9B.

### [Second Embodiment]

While the first embodiment of the image forming system has described an example configuration in which two print modules are connected to one host computer, it is also possible to connect one print module to one host computer and connect each host computer to a higher-level host computer.

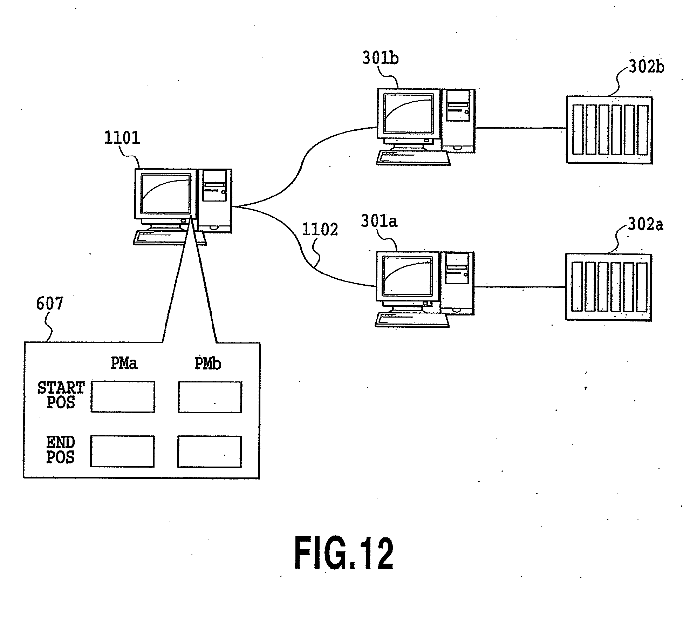

Fig. 12 shows a configuration of an image forming system according to the second embodiment of this invention. Here, parts identical with the corresponding parts of the first embodiment are given like reference numerals.

In this embodiment the print module 302a is connected to a host computer 301a through a printer cable 303a and the print module 302b is connected to a host computer 301b through a printer cable 303b. Further, the host computers 301a and 301b are connected to a higher-level host computer 1101 through a network cable 1102.

The higher-level host computer 1101 generates image data and the lower-level host computers 301a, 301b transfer data to their associated print modules 302a, 302b. With the processing shared by allocating the host computers to the print modules as describe above, image data can be processed at high speed.

In this embodiment, the page management is done by the higher-level host computer 1101 while the lower-level host computers 301a, 301b relay commands received from the higher-level host computer 1101 to the print modules 302a, 302b. The print completion page information at time of interruption of the printing operation is notified from the print modules 302a, 302b to the higher-level host computer 1101 through the lower-level host computers 301a, 301b. Then, the recovery start page information determined by the higher-level host computer 1101 is notified to the print modules 302a, 302b through the lower-level host computers 301a, 301b. Then, the print modules 302a, 302b can perform the recovery operation similar to the one described above.

### [Other Embodiments]

It is noted that the present invention is not limited to the above embodiments or variations and that various modifications may be made without departing from the spirit of the invention.

For example, although the above embodiments have described a case where a monochrome image is printed using a black ink, the image forming apparatus may have a construction in which a plurality of print modules are arranged, each constructed to conform to color inks other than the black ink or to color inks including the black ink. In this case, the number of colors used can also be determined as required. That is, the image forming apparatus may comprise two or more printers (print modules) such as point color or full color printers as well as monochrome printers.

The number of print modules and print heads is not limited to the above embodiments but a desired number can be chosen. Further, the print modules and print heads may be arranged in a desired manner. That is, the present invention can effectively be applied to a construction in which a plurality of print modules are arranged in the print medium feed direction so that they cooperate with each other to print the same or corresponding pages of image data but print on different pages at any one time. In other words, arranging a plurality of print modules in the print medium width direction is not an essential factor.

Further, although in the above embodiments the print modules have been described to use the print heads of the same lengths (print widths), the print heads may vary in length among the print modules.

Further, while in the above embodiments the recovery start page is determined by the host computer, the print module may be constructed to be able to recognize the print completion page information of other print modules based on serial communication and input/output signals between the print modules and to determine the recovery start page by itself. That is, the image forming system may perform the procedure of determining the recovery start page information without relying on the host computer.

In addition, while in the above embodiment two pages of printed image data are set as being able to be recovered, the number of pages that can be recovered may be calculated from the volume of received data, the size of receiving buffer area, the data transfer speed and the printing speed.

It is sufficient only if the capacity of the image memory as memory means is large enough to store at least the number of pages of image data that is required to be recovered. In this case, if the volume of image data supplied from the host apparatus is greater than the memory capacity, one page of image data may be supplied each time one page of image data is discarded.

Further, in the above embodiments the image forming apparatus and system having print modules using ink jet print heads have been described. The ink jet print heads may use electrothermal transducers that generate a thermal energy for ejecting ink or piezoelectric elements that generates a mechanical energy. The present invention can of course be applied to image forming apparatuses and systems employing other printing methods than the ink jet printing method.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A printing system uses a plurality of printing apparatus (302a, 302b) arranged in a print medium feed direction. A memory (505) is installed in each of the printing apparatuses to store a plurality of pages of image data. Print completion page information representing a page that has completely been printed immediately before an interruption of a printing operation is notified by each printing apparatus. Based on a plurality of pieces of the print completion page information notified, print resumption page information representing the same pages from which the printing operation is to be resumed is determined. The printing apparatuses are made to resume the printing operation beginning with those image data among the plurality of pages of image data stored in the memory which corresponds to the print resumption page information. So, when the printing operation is resumed, a page inconsistency is avoided.

In accordance with one or more embodiments of the invention, there is provided an image forming apparatus having a plurality of printing apparatuses arranged in a direction of a print medium feed direction and adapted to cooperate with each other to print the same or corresponding pages, the image forming apparatus comprising:
memory means installed in each of the printing apparatuses for
storing a plurality of pages of image data;
notification means installed in each of the printing apparatuses for outputting print completion page information when a printing operation is interrupted, the information representing a page that has completely been printed immediately before the interruption;
means for determining print resumption page information based on the plurality of pieces of the print completion page information notified from the plurality of the printing apparatuses when the printing operation is interrupted, the print resumption page information representing the same pages from which the printing operation is to be resumed; and
means installed in each of the printing apparatuses for resuming the printing operation beginning with those image data among the plurality of pages of image data stored in the memory means which corresponds to the print resumption page information.

In accordance with one or more embodiments of the invention, there is provided an image forming apparatus, wherein each of the printing apparatuses further includes means for discarding the image data of the completely printed page from the memory means at a predetermined timing after the printing operation is finished.

In accordance with one or more embodiments of the invention, there is provided an image forming apparatus, further comprising means for informing that the image data corresponding to the print resumption page information has been discarded from the memory means.

In accordance with one or more embodiments of the invention, there is provided an image forming apparatus, further comprising a host computer to supply the image data to the plurality of printing apparatuses;
wherein the print resumption page information decision means is installed in the host computer.

In accordance with one or more embodiments of the invention, there is provided an image forming apparatus, further comprising:
a plurality of host computers connected one to each of the plurality of the printing apparatuses; and
a higher-level host computer connected to the plurality of host computers and adapted to serve as a source of image data;
wherein the print resumption page information decision means is installed in the higher-level host computer;
wherein the higher-level host computer communicates the image data, the print completion page information and the print resumption page information to the plurality of printing apparatuses through the plurality of host computers.

In accordance with one or more embodiments of the invention, there is provided an image forming apparatus, wherein the print resumption page information decision means is installed in each of the printing apparatuses;
wherein the plurality of printing apparatuses are connected to communicate the print completion page information and the print resumption page information with each other.

In accordance with one or more embodiments of the invention, there is provided a printing apparatus for constructing the image forming apparatus.

In accordance with one or more embodiments of the invention, there is provided an image forming method for printing the same or corresponding pages by causing a plurality of printing apparatuses to cooperate with each other, wherein the plurality of printing apparatuses are arranged in a print medium feed direction and have memory means for storing a plurality of pages of image data, the method comprising the steps of:
causing each of the printing apparatuses to notify print completion page information when a printing operation is interrupted, the information representing a page that has completely been printed immediately before the interruption;
determining print resumption page information based on a plurality of pieces of the print completion page information notified from the plurality of printing apparatuses when the printing operation is interrupted, the print resumption page information representing the same pages from which the printing operation is to be resumed; and
causing each of the printing apparatuses to resume the printing operation beginning with those image data among the plurality of pages of image data stored in the memory means which corresponds to the print resumption page information.

An image forming apparatus has a plurality of printing apparatuses arranged in a direction of a print medium feed direction and is adapted to cooperate with each other to print the same or corresponding pages. The image forming apparatus comprises memory means installed in each of the printing apparatuses for storing a plurality of pages of image data, means, when a printing operation is interrupted, for determining the page following a page that has completely been printed before the interruption by the printing apparatus located most downstream in the print medium feed direction as a print resumption page information, the print resumption page information representing the same pages from which the printing operation is to be resumed, and means installed in each of the printing apparatuses for resuming the printing operation beginning with those image data among the plurality of pages of image data stored in the memory means which corresponds to the print resumption page information.

## Claims

1. An image forming apparatus having a plurality of printing apparatuses arranged in a direction of a print medium feed direction and adapted to cooperate with each other to print the same or corresponding pages, the image forming apparatus comprising:
memory means installed in each of the printing apparatuses for storing a plurality of pages of image data;
means, when a printing operation is interrupted, for determining the page following a page that has completely been printed before the interruption by the printing apparatus located most downstream in the print medium feed direction as a print resumption page information, the print resumption page information representing the same pages from which the printing operation is to be resumed; and
means installed in each of the printing apparatuses for resuming the printing operation beginning with those image data among the plurality of pages of image data stored in the memory means which corresponds to the print resumption page information.

2. An image forming method for printing the same or corresponding pages by causing a plurality of printing apparatuses to cooperate with each other, wherein the plurality of printing apparatuses are arranged in a print medium feed direction and have memory means for storing a plurality of pages of image data, the method comprising the steps of:
determining, when a printing operation is interrupted, the page following a page that has completely been printed before the interruption by the printing apparatus located most downstream in the print medium feed direction as a print resumption page information, the print resumption page information representing the same pages from which the printing operation is to be resumed; and
causing each of the printing apparatuses to resume the printing operation beginning with those image data among the plurality of pages of image data stored in the memory means which corresponds to the print resumption page information.
